# EUROPÄISCHE PATENTANMELDUNG

(11) **EP 1 906 507 A1**
(43) Veröffentlichungstag der Anmeldung: **02.04.2008**
(21) Anmeldenummer: 06020498.9
(22) Anmeldetag: 29.09.2006
(51) Int. Cl.: H02J 7/00

(54) **Modulare Vorrichtung zum Laden von Akkumulatoren**

(71) Anmelder: W & H Dentalwerk Bürmoos GmbH, 5111 Bürmoos (AT)
(72) Erfinder: Schröck, Rainer, 5112 Lamprechtshausen (AT); Schmied, Walter, 5151 Tarsdorf (AT)

(57) **Zusammenfassung**

Die Erfindung betrifft eine modulare Vorrichtung zum Laden eines Akkumulators (1, 1'). Die Ladevorrichtung (1,1') umfasst zumindest eine elektrische Kontaktvorrichtung (2, 2') zum Anschlus eines Akkumulators (100), eine erste, mit der zumindest einen Kontaktvorrichtu (2, 2') elektrisch verbundenen Verbindungsvorrichtung (3, 3') zum Anschluss der Ladevorrichtung (1, 1') an eine Stromquelle (4) und eine zweite Verbindungsvorrichtung (5, 5'), die mit der ersten Verbindungsvorrichtung (3, 3') elektrisch verbunden ist und die so ausgebildet ist, dass sie mit einer zweiten Ladevorrichtung (1, 1') elektrisch verbindbar ist, so dass die zweite Ladevorrichtung (1, 1') über die zweite Verbindungsvorrichtung (5, 5') mit der Stromquelle (4) elektrisch verbindbar ist. In vorteilhafter Welse ist damit ein modulares Ladegerät (1, 1') geschaffen, das der Anwender entsprechend seinen Bedürfnissen und der Anzahl der Akkumulatoren (100) aufbauen und erweitern kann.

## Beschreibung

Die vorliegende Erfindung betrifft eine Vorrichtung zum Laden eines Akkumulators gemäß dem Oberbegriff des Anspruchs 1.

Aus dem Stand der Technik sind Vorrichtungen zum Laden von Akkumulatoren bekannt, die mehrere Anschlüsse oder Kontaktvorrichtungen aufweisen, so dass mehrere Akkumulatoren gleichzeitig an eine Vorrichtung zum Laden von Akkumulatoren anschließbar und gegebenenfalls auch gleichzeitig aufladbar sind, siehe zum Beispiel die Patentanmeldung US 2001/0020838 A1. Derartige Ladevorrichtungen sind jedoch sehr groß, unhandlich zu handhaben und verbrauchen viel Stellplatz. Besitzt ein Anwender nur wenige mit Akkumulatoren betriebene Geräte, so kann der Fall eintreten, dass die Anzahl der Kontaktvorrichtungen höher ist als die Anzahl der zu ladenden Akkumulatoren, die Ladevorrichtung also zu groß dimensioniert ist.

Alternativ gibt es Ladevorrichtungen mit wenigen, oft nur ein oder zwei Kontaktvorrichtungen. Derartige Ladegeräte reichen aus, wenn der Anwender nur wenige mit Akkumulatoren betriebene Geräte hat. Nimmt die Anzahl der mit Akkumulatoren betriebenen Geräte zu, so benötigt der Anwender zusätzliche Ladevorrichtungen, wobei er dann mehrere separate Ladevorrichtungen hat, die jede eine eigene Stromversorgung und somit einen eigenen Stromanschluss benötigt, wobei zusätzlich auch eine große Anzahl von schwer zu bündelnden Stromkabeln vorliegt. Die Ladegeräte können aufgrund unterschiedlicher Außenformen auch nicht Platz sparend gelagert worden und weisen oftmals unterschiedliche Bedienelemente auf.

Der vorliegenden Erfindung liegt daher die Aufgabe zugrunde eine verbesserte Vorrichtung zum Laden von Akkumulatoren ohne die oben angeführten Nachteile zu schaffen.

Diese Aufgabe wird gemäß der vorliegenden Erfindung durch eine Vorrichtung zum Laden von Akkumulatoren mit den Merkmalen des Anspruchs 1. Besonders vorteilhafte Ausführungsformen sind in den Unteransprüchen angeführt.

Die erfindungsgemäße Vorrichtung zum Laden von Akkumulatoren, im Weiteren auch als Ladegerät bezeichnet, umfasst zumindest eine elektrische Kontaktvorrichtung zum Anschluss eines Akkumulators, eine erste, mit der Kontaktvorrichtung elektrisch verbundenen Verbindungsvorrichtung zum Anschluss des Ladegeräts an eine Stromquelle und eine zweite Verbindungsvorrichtung, die mit der ersten Verbindungsvorrichtung elektrisch verbunden ist und die so ausgebildet ist, dass sie mit einer zweiten Vorrichtung zum Laden von Akkumulatoren elektrisch verbindbar ist, so dass die zweite Vorrichtung zum Laden von Akkumulatoren über die zweite Verbindungsvorrichtung mit der Stromquelle elektrisch verbindbar ist. In vorteilhafter Weise ist damit ein modulares Ladegerät geschaffen, das der Anwender entsprechend seinen Bedürfnissen und der Anzahl der Akkumulatoren aufbauen und erweitern kann. Der Vorteil liegt insbesondere darin, dass die Ladegeräte nicht nur mechanisch miteinander verbunden sind, sondern dass sie auch elektrisch miteinander verbunden sind, so dass mehrere Ladegeräte nur mit einem Stromkabel versorgt werden können.

Die erste Verbindungsvorrichtung jedes Ladegeräts ist so ausgebildet, dass sie wahlweise an eine Stromquelle oder an ein anderes Ladegerät anschließbar ist. Damit entfällt die Notwendigkeit dafür zwei separate Verbindungsvorrichtung vorzusehen.

Die Erfindung wird nachfolgend anhand bevorzugter Ausführungsbeispiele und Bezug nehmend auf die beigefügten Zeichnungen erläutert:
Figur 1 zeigt eine Aufsicht auf ein Ausführungsbeispiel einer Vorrichtung zum Laden von Akkumulatoren.
Figur 2 zeigt die Unterseite eines Ausführungsbeispiels einer Vorrichtung zum Laden von Akkumulatoren.
Figur 3 zeigt ein Ausführungsbeispiel einer kombinierte Abdeck- und Verbindungsvorrichtung für eine Vorrichtung zum Laden von Akkumulatoren.
Figur 4 zeigt eine teilweise Schnittdarstellung durch die Vorrichtung zum Laden von Akkumulatoren gemäß Figur 1.
Figur 5 zeigt eine Schnittdarstellung durch einen Akkumulator zur Verwendung mit einer Vorrichtung zum Laden von Akkumulatoren.
Figur 6 zeigt in Form eines schematischen Schaltbilds ein Ausführungsbeispiel zweier miteinander verbundene Schaltungsanordnungen zweier Vorrichtungen zum Laden von Akkumulatoren.

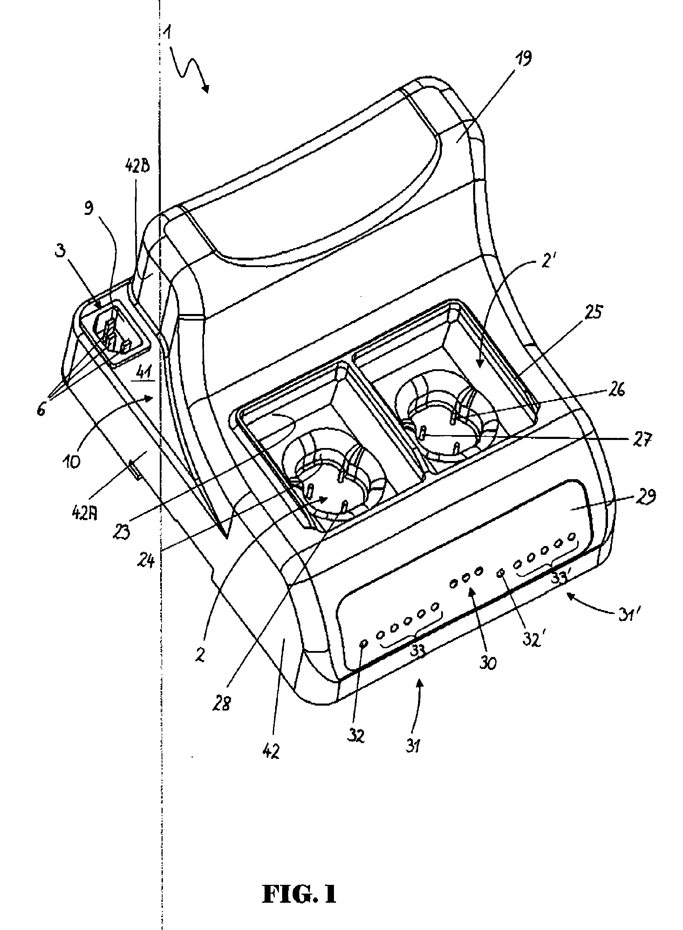

Figur 1 zeigt ein erfindungsgemäßes Ladegerät 1 mit einem Außengehäuse 19 in dem zwei eleKtrische Kontaktvorrichtungen 2, 2' angeordnet sind. Die Anzahl der Kontaktvorrichtungen 2, 2' ist rein exemplarisch, so dass das Ladegeräte selbstverständlich auch nur eine oder mehr ais zwei Kontaktvorrichtungen aufweisen kann. Jede der beiden Kontaktvorrichtungen 2, 2' umfasst eine erste Ausnehmung 23 und eine zweite Ausnehmung 24, jeweils in Form eines Rücksprungs, die unterschiedliche Durchmesser und Formen aufweisen. Durch diese unterschiedlichen Ausformungen können Akkumulatoren mit unterschiedlichen Außenformen an das Ladegerät 1 angeschlossen und geladen werden. Ausnehmung 24 ist im Wesentlichen rechteckig geformt, während Ausnehmung 24 eine abgerundete, im Wesentlichen ovale Form aufweist. Ausnehmung 24 ist in Ausnehmung 23 angeordnet, so dass die Kontaktvorrichtungen 2, 2' einen stufenförmigen Aufbau aufweisen. Ein schmaler Steg 25 umgibt jeweils drei Seiten der beiden Kontaktvorrichtungen 2, 2'.

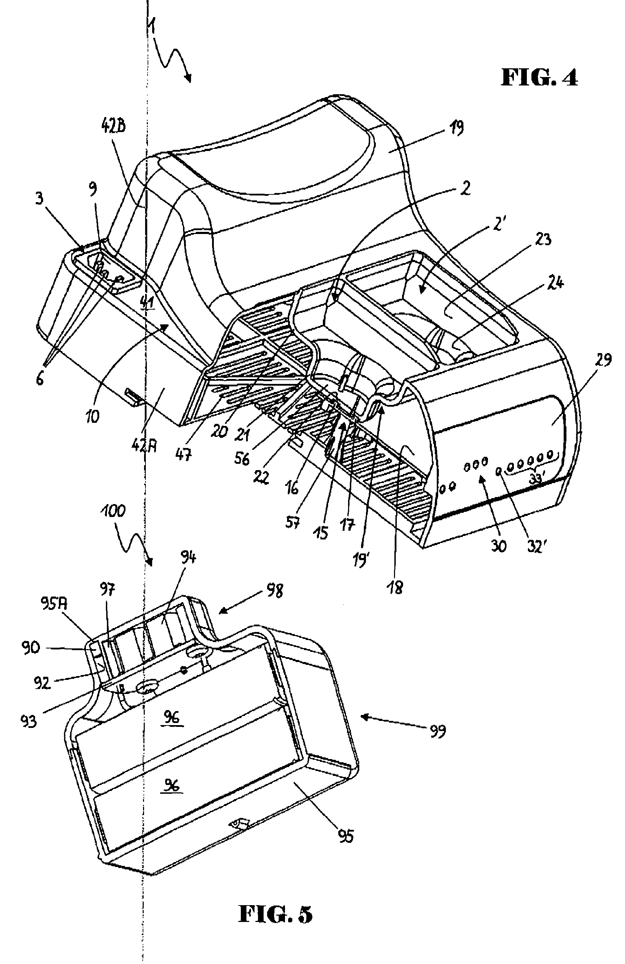

Ein Beispiel eines Akkumulators, der mit dem Ladegerät 1 geladen werden kann, ist in Figur 5 dargestellt. Der Akkumulator 100 besteht aus einem Gehäuse 95, das bevorzugt aus Kunststoff ausgeführt ist und das einen Körper 99, der zumindest teilweise in die Ausnehmung 23 einsetzbar ist, und einen Fortsatz 98, der zumindest teilweise in die Ausnehmung 24 einsetzbar ist, umhüllt. Im Gehäuse 95 sind eine oder mehrere wiederaufladbare Akkumulatorzellen 96 aufgenommen. Im Fortsatz 98 sind auf einer Leiterplatte 93 mehrere Kondensatoren 94 zum Abdecken von kurzfristigen Leistungsspitzen und mehrere elektrische Kontakte 97, zum Beispiel Kontaktbuchsen angeordnet. Leitungen verbinden die Leiterplatte 93 mit den Akkumulatorzellen 96,

Ein Aspekt der Erfindung betrifft die berührungslose Erkennung unterschiedlicher Akkumulatoren, insbesondere mittels Magnetsensoren (siehe weiter unten). Dabei kann es notwendig sein, dass die Akkumulatoren mit einem oder mehreren Magnetelementen versehen sind, wie dies beispielhaft in Figur 5 gezeigt wird. Magnetelement 90 ist in Fortsatz 98 in einer Bohrung 92 aufgenommen. Um eine möglichst klare Detektion eines oder mehrere magnetischer Parameter, wie zum Beispiel der Magnetfeldstärke oder der Polarität, zu gewährleisten, ist das Magnetelement 90 möglichst nahe an der Oberfläche des Akkumulators 100 angebracht und / oder ragt das Magnetelement 90 zumindest teilweise in die Gehäusewand des Gehäuse 95 hinein, so dass die Gehäusewand in diesem Bereich eine geringere Wandstärke 95A aufweist als in anderen Gehäuseabschnitten. Alternativ kann das Magnetelement 90 die Gehäusewand auch durchbrechen, wobei es dann bevorzugt in einer eigenen Kammer, die mit dem inneren des Akkumulators nicht verbunden ist, enthalten ist, so dass keine Verschmutzungen in den Akkumulator eindringen können. Das Magnetelement 90 kann als magnetisierbare Spule oder als Permanentmagnet ausgeführt sein.

Die Kontaktvorrichtungen 2, 2' umfassen das Weiteren zwei elektrische Kontaktelemente 26, 27, zum Beispiel in Form von Kontaktstiften, die Ober eine erste Verbindungsvorrichtung 3 mit einer Stromquelle 4 verbindbar oder verbunden sind. Über diese beiden Kontaktelemente 26. 27, die beim Anschluss des Akkumulators 100 an das Ladegerät 1 in den Kontaktbuchsen 97 aufgenommen worden, erfolgt in bekannter Welse das Wiederaufladen der Akkumulatorzellen 96 des Akkumulators 100.

Ein drittes elektrisches Kontaktelement 28, ebenfalls beispielhaft als Kontaktstift ausgebildet, dient zur Temperaturüberwachung des Akkumulators 100 während des Ladevorgangs. Dazu ist bevorzugt ein Temperatursensor im Inneren des Akkumulators 100 angeordnet. Beim Anschluss des Akkumulators 100 an das Ladegerät 1 wird der Temperatursensor über Kontakt 28 mit einer Temperatur-Auswerteschaltung im Inneren des Ladegeräts 1 verbunden. Die Temperatur-Auswerteschaltung wertet die vom Temperatursensor erhaltenen Signale aus und reagiert auf das Überschreiten eines ersten Temperaturschwellenwerts oder das Unterschreiten eines zweiten Temperaturschwellenwerts, zum Beispiel durch Abgabe eines akustischen oder visuellen Wamhinweises oder durch Unterbrechen des Ladevorgangs. Auf diese Weise wird das Laden des Akkumulators 100 außerhalb eines erwünschten Temperaturbereichs und damit eine etwaige Schädigung des Akkumulators 100 verhindert. Bevorzugt ist der Temperatursensor als Widerstand im Akkumulator 100 ausgebildet, dessen erstes Ende mit Kontakt 28 und dessen zweites Ende auf Masse verbunden ist.

Die Kontaktelemente 26, 27 sind mit einer im Inneren des Ladegeräts 1 angeordneten Ladeschaltung verbunden. In bekannter Weise bereitet die Ladeschaltung den von der Stromquelle 4 über die erste Verbindungsvorrichtung 3 zu den Kontakten 26, 27 fließenden Strom derart auf, dass er zum Laden der Akkumulatoren 100 geeignet ist, zum Beispiel durch Gleichrichten des Ladestroms, Transformation auf die vom Akkumulator 100 benötigte Spannung oder Einstellen der benötigten Stromstärke.

Das Ladegerät 1 weist bevorzugt an seiner Vorderseite eine Anzeige 29 auf, um den Anwender über Unterschiedliche Betriebszustände, Betriebsparameter oder andere relevante Daten zu informieren. Die Anzeige 29 ist in den Figuren 1 und 4 als Leuchtanzeige ausgebildet, die mehrere Beleuchtungsmittel, bevorzugt Leuchtdioden (LEDs) umfasst. Selbstverständlich können auch andere bekannte Anzeigevorrichtungen, wie zum Beispiel LCD-Anzeigen verwendet werden. Soll der Anwender die Möglichkeit haben zum Beispiel Parameter oder Programme auswählen zu können, so kann als Anzeige auch ein so genannter Touch-Screen verwendet werden. Alternativ oder ergänzend können zur Eingabe oder Auswahl von Parametern auch Taster verwendet werden.

Anzeige 29 umfasst mehrere Anzeigebereiche: Ein erster Bereich 30 mit drei LEDs lässt erkennen, bb das Ladegerät 1 betriebsbereit ist. Ein zweiter Bereich 31, 31' ist den jeweilligen Kontaktvorrichtungen 2, 2' zugeordnet und beinhaltet bevorzugt eine Fehleranzeige 32, 32', die zum Beispiel den Anschluss eines kaputten Akkumulators oder ein Gebrechen der Kontaktvorrichtungen 2, 2' anzeigt, und eine Füllstandsanzeige 33, 33' zur Darstellung des Fortschritt des Ladevorgangs. Anzeige 29 ist in bekannter Weise mit Schaltungen im Inneren des Ladegeräts verbunden, die Messwerte und Sensorsignale von Sensoren, Detektoren, Messkreisen oder -schaltungen empfangen und verarbeiten und entsprechend die LEDs der Anzeigenbereiche 30 - 33, 33' ein- bzw. ausschalten.

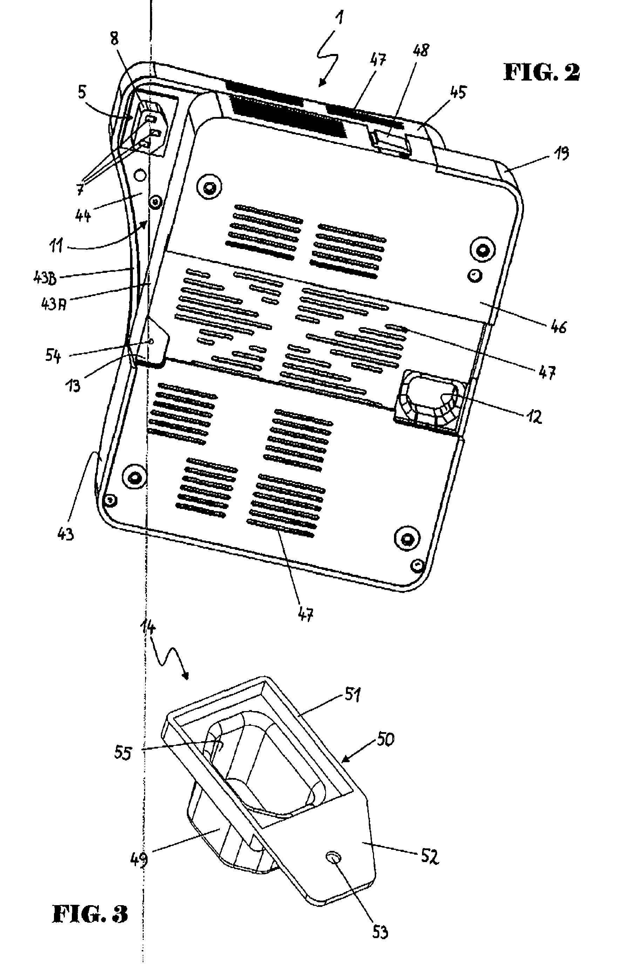

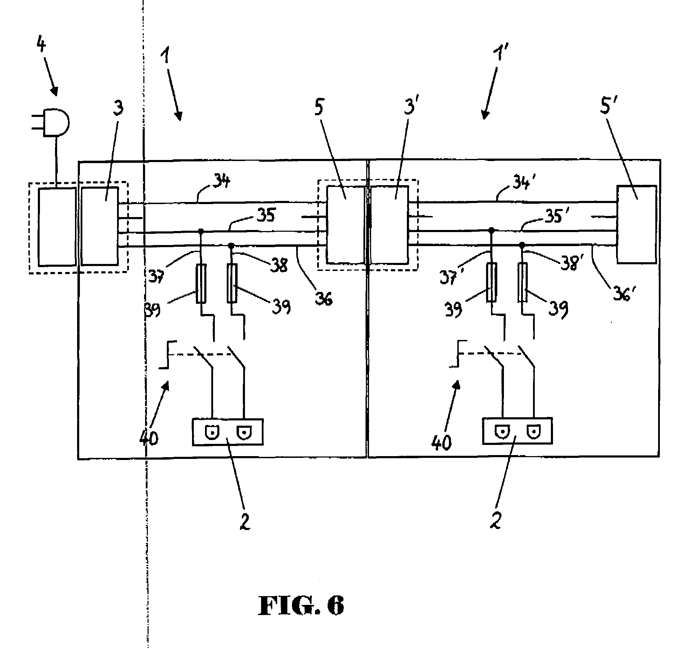

Wie aus den Figuren 1 und 2 ersichtlich ist, weist das Ladegerät 1 eine erste Verbindungsvorrichtung 3 und eine zweite Verbindungsvorrichtung 5 auf. Verbindungsvordchtung 3 das Ladegeräts 1 dient zur Verbindung des Ladegeräts 1 und aller darin enthaltenen Verbraucher, insbesondere der Kontaktvorrichtungen 2, 2' mit einer Stromquelle 4 Und ist in einer Öffnung des Gehäuses 19 angeordnet. Die zweite Verbindungsvorrichtung 5 ist mit der ersten Verbindungsvonichtung 3 elektrisch verbunden und ebenfalls in einer Öffnung das Gehäuses 19 aufgenommen. Die zweite Verbindungsvorrichtung 5 ist derart ausgebildet, dass sie mit einer zweiten Vorrichtung zum Laden von Akkumulatoren 1' (siehe Figur 6) elektrisch verbindbar ist, so dass die zweite Vorrichtung zum Laden von Akkumulatoren 1' über die zweite Verbindungsvorrichtung 5 mit der Stromquelle 4 elektrisch verbindbar ist.

Die erste Verbindungsvorrichtung 3 umfasst mehrere stittförmige, elektrische Kontakte 6, die zweite Verbindungsvorrichtung 5 mehrere buchsenförmige Kontakte 7. Beide Verbindungsvorrichtungen 3. 5 können jedoch selbstverständlich auch aus allen anderen bekannten Formen von Kontakten bestehen, so zum Beispiel aus stift- oder buchsenförmigen Kontakten, aus Federkontakten oder aus Plankontakten. Wird als Stromquelle 4 Wechselstrom verwendet, so weist die beiden Verbindungsvorrichtungen 3, 5 drei Kontakte auf, die als L-, N- und PE-Kontakte ausgebildet sind.

In Figur 6 ist schematisch die Verbindung zweier Vorrichtungen zum Laden von Akkumulatoren 1, 1'dargestellt. Das Ladegerät 1' entspricht in Aufbau und Funktion dem Ladegerät 1 aus den Figuren 1 und 2, bevorzugt ist zumindest der Aufbau des Ladegeräts 1' Identisch mit dem Ladegerät 1. Aus Gründen der besseren Übersichtlichkeit wurde bei beiden Ladegeräten 1, 1' nur jeweils eine Kontaktvorrichtung 2 dargestellt. Ladegerät 1 ist über die erste Verbindungsvorrichtung 3 lösbar mit einer Stromquelle 4, hier in Form des allgemeinen Strgmversorgungsnetzes, verbunden. Die erste Verbindungsvorrichtung 3, 3' jedes Ladegeräts 1, 1' ist so ausgebildet, dass sie wahlweise an die Stromquelle 4 oder an ein anderes Ladegerät anschließbar ist. Drei Leitungen 34, 35, 36, die als L-, N- und PE-Leitungen ausgeführt sind, verbinden die erste Verbindungsvorrichtung 3 mit der zweiten Verbindungsvorrichtung 5. Die zweite Verbindungsvorrichtung 5 ist lösbar mit der ersten Verbindungsvorrichtung 3' des Ladegeräts 1' verbunden, so dass die Stromversorgung des zweiten Ladegeräts 1' über die Verbindungsvorrichtungen 3, 5 und die Leitungen 34-36 erfolgt. Zwischen dem Schalter 40 und der Kontaktvorrichtung 2 befindet sich die Ladeschaltung (nicht dargestellt), die unter anderem ein Schaltnetzteil oder einen Transformator umfassen kann.

Auch Ladegerät 1' weist drei Leitungen 34', 35', 36' und eine zweite Verbindungsvorrichtung 5' auf, so dass an dieses Ladegerät 1' ein weiteres Ladegerät anschließbar ist Auf diese Weise lässt sich eine beliebig lange Kette aus Ladegeräten zusammenfügen, wobei die Stromversorgung Jedes Ladegeräts über die vorhergehenden, also zwischen der Stromquelle 4 und dem Ladegerät angeordneten Ladegeräte erfolgt. Jedem Ladegerät steht somit die gleiche Versorgungsspannung zur Verfügung.

Wie aus Figur 6 des Weiteren erkennbar ist, zweigen von den Leitungen 35, 35', 36, 36', die als L- und N-Leiter dienen, zwei weitere Leitungen 37, 37'. 38, 38' ab, die die Kontaktvorrichtung 2 und gegebenenfalls weitere Kontaktvorrichtungen mit der ersten Verbindungsvorrichtung 3, 3' und der Stromquelle 4 verbinden. Bevorzugt sind an den Leitungen 37, 37', 38. 38' elektrische Sicherungen 39 zur Strombegrenzung und ein Schalter 40 zum Öffnen / Schließen der Verbindung der Kontaktvorrichtung 2 mit der Verbindungsvorrichtung 3 vorgesehen.

Bevorzugt sind die Verbindungsvordchtungen 3, 3', 5, 5' so ausgebildet, dass durch das Zusammenfügen der Verbindungsvorrichtungen 3, 3', 5, 5' eine mechanische, insbesondere eine form- oder kraftschlüssige Verbindung, besonders bevorzugt eine Steckverbindung zwischen der ersten und zweiten Vorrichtung zum Laden von Akkumulatoren 1, 1' herstellbar ist, so dass zum Trennen der beiden Ladegeräte 1, 1' ein zusätzlicher Kraftaufwand notwendig ist. Die Verbindungsvorrichtungen 3, 3', 5, 5' dienen somit zusätzlich, auch als mechanische Verbindungselemente. Damit wird in vorteilhafter Weise ein verbesserter Zusammenhalt zwischen den Ladegeräten 1, 1' erreicht und es können mehrere miteinander verbundene Ladegeräte als eine Einheit gehandhabt werden. insbesondere ist es dadurch auch möglich, eine Verbindung zwischen den Ladegeräten 1, 1' zu schaffen, bei der keine außerhalb der Ladegeräte 1, 1' verlaufende Kabel oder Leitungen benötigt werden. Wie aus den Figuren 1 und 2 ersichtlich, ist eine der beiden Verbindungsvorrichtungen 3, 5, bevorzugt die zweite Verbindungsvorrichtung 5 als Vorsprung, Stecker oder Steckglied 8 und die andere der beiden Verbindungsvorrichtungen 3, 5, bevorzugt die erste Verbindungsvorrichtung 3 als Rücksprung, Buchse oder hohle Steckaufnahme 9 zur Aufnahme des Vorsprungs 8 ausgebildet. Vorsprung 8 und Rücksprung 9 können zur Erhöhung des mechanischen Zusammenhalts spezifische Formen aufweisen, zum Beispiel als Vieleck ausgebildet sein. Steckglied 8 und Steckaufnahme 9 können als eigenständige, zumindest teilweise aus Kunststoff hergestellte Bauteile ausgeführt sein, die in Öffnungen des Gehäuses 19 eingefügt und darin befestigt sind.

Ladegerät 1, insbesondere das Gehäuse 19 weist bevorzugt einen Vorsprung 11 und einen Rücksprung 10 auf, wobei eine der beiden Verbindungsvorrichtungen 3, 5, bevorzugt die zweite Verbindungsvorrichtung 5 am Vorsprung 11 und die andere der beiden Verbindungsvorsiichtungen 3, 5, bevorzugt die erste Verbindungsvorrichtungen 3 am Rücksprung 10 angeordnet ist. Rücksprung 10 und Vorsprung 11 können gleich oder unterschiedlich geformt sein, verschiedenste, zum Beispiel gebogene, eckige oder gewinkelte Formen aufweisen und an unterschiedlichen Bereich des Gehäuses 19 vorgesehen sein, zum Beispiel an einer der Seitenwände 42, 43 oder an der Oberseite und Unterseite 46 des Ladegeräts 1, 1'. Unabhängig von den möglichen Ausführungsformen ist für dieses bevörzugte Ausführungsbeispiel primär ausschlaggebend, dass der Vor- und Rücksprung 10,11 so angeordnet oder derart ausgeführt sind, dass eine möglichst Platz sparende Anordnung oder Stapelung der miteinander verbundenen Ladegeräte 1, 1' möglich wird. Unter einer Platz sparenden Anordnung wird insbesondere eine Anordnung verstanden, bei der die Ladegeräte 1, 1' nur einen geringen Abstand voneinander aufweisen oder Teile der Gehäuse 19 von zwei Ladegeräten 1, 1 einander berühren und / oder für die Verbindung den Ladegeräte 1, 1' keine zusätzlichen, außerhalb der Ladegeräte 1, 1' verlaufende Kabel oder Leitungen benötigt werden. Die Platz sparenden Anordnung der Ladegeräte 1, 1 umfasst sowohl deren Anordnung nebeneinander, hintereinander als auch übereinander.

Bei der Äusführungsform des Ladegeräts nach den Figuren 1 und 2 ist die erste Verbindungsvorrichtung 3 an einem Rücksprung 10 angeordnet, der durch eine Stufe 41 in einer Seitenwand 42 des Gehäuses 19 gebildet ist. Die Seitenwand 42 weist damit über einen Teilabschnitt ihrer Länge im Bereich der Stufe 41 einen im Wesentlichen gerade verlaufenden, unteren Wandabschnitt 42A und einen gebogen oder geschwungen verlaufenden, vom unteren Wandabschnitt 42A weg weisenden oberen Wandabschnitt 42B auf. Die zweite Verbindungsvorrichtung 5 ist an der der Seitenwand 42 gegenüber liegenden Seitenwand 43 des Ladegeräts 1 an einem Vorsprung 11 angeordnet. Vorsprung 11 wird ebenfalls durch eine Stufe 44 gebildet, so dass Seitenwand 43 einen im Wesentlichen gerade verlaufenden, unteren Wandabschnitt 43A und einen gebogen oder geschwungen verlaufenden, vom unteren Wandabschnitt 43A weg weisenden oberen Wandabschnitt 43 B hat. Vorsprung 11 und Rücksprung 10 sind somit im Wesentlichen komplementär geformt, so dass sie beim Zusammenfügen zweier Ladegeräte 1,1' fließend und kompakt ineinander greifen.

An der Rückwand 45 und der Unterseite 46 des Ladegeräts 1 sind eine Vielzahl an Lüftungsschlitzen 47 vorgesehen. Ein Bedienelement 48 an der Rückwand 45 dient zum Ein- bzw. Ausschalten des Ladegeräts 1 und ist mit Schalter 40 verbunden. Auf der Unterseite 46 des Ladegeräts sind des Weiteren eine erste Anschlussvorrichtung 12 und eine zweite Anschlussvorrichtung 13 vorgesehen. Die Anschlussvorrlchtungen 12, 13 dienen zur mechanischen Verbindung der Ladegeräte 1,1', sie können zum Beispiel als Steck- und / oder als Schraubverbindung ausgeführt sein.

Zur Verbindung der Ladegeräte 1, 1' wird ein separates mechanisches Verbindungselement verwendet, das in den Anschlussvorrichfiungen 12, 13 aufnehmbar, damit verbindbar oder daran befestigbar ist. Ein bevorzugtes Ausführungsbeispiel eines derartigen verbindungselements ist in Figur 3 dargestellt und mit dem Bezugszeichen 14 versehen. Verbindungselement 14 besteht aus einem Körper 49, der zum Beispiel länglich, rund, rechteckig oder mehrseitig ausgebildet sein kann und als Steckelement dient, das in die als hohle Steckaufnahme ausgebildete Anschlussvorrichtung 12, die im Wesentlichen die gleiche Form wie Körper 49 hat, einsetzbar ist. An den Körper 49 schließt eine Basis 50 an, die aus einem Rahmen 51 und einem Fortsatz 52 mit einer Bohrung 53 gebildet wird. Fortsatz 52 ist derart geformt, dass er in Anschlussvorrichtung 13 einsetzbar und am Ladegerät befestigbar ist, zum Beispiel mittels einer Schraube, die die Bohrung 53 durchsetzt und in einer weiteren Bohrung 54 mit innengewinde im Ladegerät 1 verschraubbar ist.

Jedem Ladegerät 1 ist ein Verbindungselement 14 zugeordnet, das in die Anschlussvorricbtung 12 einsetzbar ist, wobei die Anschlussvorrichtung 12 so an der Unterseite 46 des Ladegeräts 1 angebracht ist, dass zumindest ein Teil des Fortsatzes 52 mit der Bohrung 53 über die Seitenwand 42, 43 des Ladegeräts 1 hinausragt. Wird dieses Ladegerät 1 nun mit einem weiteren Ladegerät 1' verbunden, so kann Fortsatz 52 mit der Anschlussvorrichtung 13 des Ladegeräts 1' verschraubt werden kann. Sind die Verbindungsvorrichtungen 3, 3', 5, 5' auch als mechanische Verbindungselemente ausgebildet, so ist klarerweise darauf zu achten, dass die Abstände zwischen der ersten Verbindungsvorrichtung 3, 3' und der ersten Anschlussvorrichtung 12 und zwischen der zweiten Verbindugsvorrichtung 5, 5' und der zweiten Anschlussvorrichtung 13 gleich sind.

Bevorzugt ist der Körper 49 von Verbindungselement 14 als Hohlkörper mit einem Hohlraum 55 ausgebildet. Hohlraum 55 hat im Wesentlichen die gleiche Form wie das Steckglied 8 der zweiten Verbindungsvorrichtung 5 und die Innenabmessungen des Hohlraums 55 entsprechen in etwa den Außenabmessungen des Steckglieds 8. Verbindungselement 14 kann somit auf Steckglied 8 aufgesetzt und an Stufe 44 durch Bohrung 53 und eine weitere Bohrung mit Innengewinde in Stufe 44 verschraubt werden. Verbindungselement 14 dient somit zusätzlich als Schutzkappe für das Steckglied 8, solange an dieses Steckglied 8 noch keine Steckaufnahme 9 einer ersten Verbindungsvorrichtung 3' eines weiteren Ladegeräts 1' angeschlossen ist. Wird ein weiteres Ladegerät 1' angeschlossen, so muss Verbindungselement 14 von Steckglied 8 abgenommen werden und kann umgehend zur mechanischen Verbindung der beiden Ladegeräte 1,1' verwendet werden.

Figur 4 zeigt in einer teilweisen Schnittdarstellung einen Schnitt durch die Kontaktvorrichtung 2 und darunter liegende Bereiche des Ladegeräts 1. Die Kontaktvorrichtungen 2, 2' sind so ausgebildet, dass sie mit einer Stromquelle 4 verbunden oder verbindbar sind und dass Akkumulatoren 100 mit unterschiedlichen Ladeanforderungen anschließbar sind. Die Akkumulatoren mit unterschiedlichen Ladeanforderungen können zum Beispiel unterschiedliche Ladeverfahren oder unterschiedliche Arten von Ladeströmen, insbesondere unterschiedliche Spannungen und / oder Stromstärken benötigen. Sie können, wie bereits weiter oben beschrieben, zusätzlich auch unterschiedlich geformt sein.

Kontaktvorrichtung 2 weist einen Gehäuseabschnitt 19' auf, der Teil des Gehäuses 19 des Ladegeräts 1 ist. Ein Teil des Gehäuses 19' bildet den Boden 56 der Kontaktvorrichtung 2 und der Aufnahme 24. Unterhalb des Bodens 56 im Inneren des Ladegeräts 1 ist zumindest ein Magnetsensor 16, 17 angeordnet. Der oder die Magnetsensoren 16, 17 sind Teil einer berührungslosen ldentifikationsvorrichtung 15 zur Erkennung von Akkumulatoren mit unterschiedlichen Ladeanforderungen.

Der oder die Magnetsensoren 16, 17, die zum Beispiel als Hall-Sensoren oder als Rsed-Kontakte ausgebildet sein können, bestimmen bei der Erkennung des Akkumulators eine oder mehr ere magnetische Parameter eines oder mehrerer Magnetelemente, die mit dem Akkumulator verbunden sind. In Figur 5 ist beispielhaft ein derartiger Akkumulator 100 mit einem Magnetelement 90 dargestellt. Bei den detektierten magnetischen Parametern kann es sich bevorzugt um die magnetischen Polarität, die Magnetfeldstärke oder die magnetische Feldrichtung handeln. Entsprechend werden als Magnetsensoren 16, 17 Sensoren verwendet, die das Vorhandensein eines Magnetfelds oder die magnetische Polarität oder die Magnetfeldstärke oder die Feldrichtung detektieren.

Um eine möglichst zuverlässige Detektion der magnetischen Parameter zu erreichen, soll während des ldentifikationsvorgangs der Abstand zwischen dem zumindest einen Magnetelement 90 und dem zumindest eine Magnetsensor 16, 17 möglichst gering sein. Bevorzugt wird daher der zumindest eine Magnetsensor 16, 17 möglichst nahe am Boden der 56 der Kontaktvorrichtung 2 angeordnet. Besonders bevorzugt weist das Gehäuse 19' der Kontaktvorrichtung 2 eine Gehäusewand 20 mit zumindest einem Bereich einer ersten Wandstärke 21 und mit einem Bereich einer zweiten, geringeren Wandstärke 22 auf, wobei der zumindest eine Magnetsensor 16, 17 im Wesentlichen im Bereich der zweiten, geringeren Wandstärke 22 angeordnet ist.

Der Aufbau der Kontaktvorrichtung 2' und gegebenenfalls weiterer Kontaktvorrichtungen des Ladegeräts 1 sowie die Anordnung des zumindest einen Magnetsensors 16, 17 gleicht dem beschriebene Aufbau der Kontaktvorrichtung 2.

Im inneren des Ladegeräts 1 ist des Weiteren eine Ladeschaltung vorgesehen, die mit der identifikdtionsvofnchtung 15 verbunden ist. Der zumindest eine Magnetsensor 16, 17 kann somit bei Detektion eines magnetischen Parameters ein identlflkationssignel an die Ladeschaltung Weiterleiten, das die Ladeschaltung verarbeitet und zur Erkennung der unterschiedlichen, anschließbaren Akkumulatorentypen nutzt. Hat die Ladeschaltung den an die Kontaktvorrichtung 2, 2' angeschlossenen Akkumulator erkannt, so bestimmt sie die für diesen Akkumulator benötigte(n) Ladeanforderung(en). Anschließend lädt sie den Akkumulator gemäß dieser Ladeanforderung, zum Beispiel mit dem für diesen Akkumulator passenden Ladeverfahren oder mit dem geeigneten Ladestrom. Die Ladeanforderungen für die unterschiedlichen Akkumulatortypen können in einem Speicher, der im Ladegerät 1 angeordnet oder mit diesem verbunden ist, abgelegt sein, Alternativ schaltet die Identifikationsvdrrichtung 15 direkt die Parameter der Ladeschaltung, womit in vorteilhafter Weise kein Mikr6kontroller und kein Speicher benötigt werden.

Im Wesentlichen im Bereich jeder elektrischen Kontaktvorrichtung 2, 2' können ein Magnetsensor 16, 17 oder mehrere Magnotsensoren 16, 17 gleichen oder unterschiedlichen Typs angeordnet sein. Liegt nur ein Magnetsensor 16, 17 vor, der bei Vorhandensein eines Magnetfelds ein identifikationssignal abgibt, so können damit zwei Akkumulatorentypen unterschieden werden, wobei einer der beiden Akkumulatoren mit einem Magnetelement versehen ist und der andere Akkumulator kein Magnetelement trägt. Erhält die Ladeschaltung ein ldentifikationssignal, zum Beispiel wenn das Magnetfeld detektiert wird, so lädt sie den Akkumulator gemäß ersten Ladeanforderungen, erhält sie kein Identifikationssignal, so lädt sie den Akkumulator gemäß zweiten Ladeanforderungen. Sind jedoch mehrere derartige Magnetsensoren 16, 17 pro Kontaktvorrichtung 2, 2' vorgesehen, so können mehrere Akkumulatorentypen unterschieden werden, in dem die Akkumulatoren keinen, einen oder mehrere Magnetelemente, die an unterschiedlichen Stellen am Akkumulator befestigt sind, aufweisen. Die Erkennung des jeweiligen Akkumulators erfolgt damit nicht alleine über die Detektion eines Magnetfelds bzw. dessen Nicht-Vorhandensein, sondern auch an welchem Ort ein Magnetfeld detektiert wird.

Wird als Magnetsensor 16, 17 ein Sensor verwendet, der zur Abgabe eines Identifikationssignals in Abhängigkeit der detektierten magnetischen Polarität ausgebildet ist, so können ebenfalls zwei Akkumulatoren unterschieden werden, wobei einer der beiden Akkumulatoren ein Magnetelement enthält, dessen Südpol zum Magnetsensor 16, 17 gerichtet ist, wenn der Akkumulator an die Kontaktvorrichtung 2, 2' angeschlossen ist, und der zweite Akkumulator ein Magnetelement enthält, dessen Nordpol zum Magnetsensor 16, 17 gerichtet ist, wenn der Akkumulator an die Kontaktvorrichtung 2, 2' angeschlossen ist. Weist das Ladegerät mehrere Sensoren auf, so können wiederum mehrere Typen von Akkumulatoren erkannt werden, in dem jeder Sensor ein Identifikationssignal abgibt, wenn die Polarität des ihm zugeordneten Magnetelements für ihn erkennbar ist.

Als alternativer Sensortyp ist ein Magnetsensor 16, 17 verwendbar, der zur Abgabe eines Identifikationssignals in Abhängigkeit der detektierten Magnetfeldstärke ausgebildet ist. Der Vorteil eines derartigen Sensors liegt darin, dass er unterschiedliche Magnetfeldstärken detektieren kann, so dass zur Unterscheidung mehrere Akkumulatoren nur ein Sensor benötigt wird und die Akkumulatoren jeweils nur ein Magnetelement benötigen, wobei jedes Magnetelement eine unterschiedliche Feldstärke aufweist. Selbstverständlich ist es jedoch auch hier möglich, jede Kontaktvorrichtung 2, 2' mit mehreren Feldstärkesensoren und jeden Akkumulator mit mehreren Magnetelementen zu versehen.

Des Weiteren kann der Magnetsensor 16, 17 zur Abgabe eines Identifikationssignals in Abhängigkeit der detektierten Feldrichtung ausgebildet sein. Dieser Sensortyp erkennt unterschiedlich Ausrichtungen von Feldrichtungen, so dass auch hier zur Unterscheidung mehrere Akkumulatoren nur ein Sensor benötigt wird. Zur Erkennung der Akkumulatoren reicht wiederum ein Magnetelement aus, das auf jedem Akkumulator unterschiedlich ausgerichtet ist so dass sich deren Feldrichtung unterscheidet. Selbstverständlich ist es jedoch auch hier möglich, jede Kontaktvorrichtung 2, 2' mit mehreren Feldrichtungssensoren und jeden Akkumulator mit mehreren Magnetelementen zu versehen.

Unter dem Begriff Magnetsensor werden erfindungsgemäß sowohl Einzelsensoren verstanden, zum Beispiel ein Hall-Sensor oder ein Reed-Kontakt, wie auch die Zusammenfassung mehrerer Einzelsensoren zu einer funktionellen Einheit, so dass sie die oben angeführten magnetischen Parameter detektieren können.

Um eine gute Signal- oder magnetische Parametsrerkennung ohne gegenseitige, unerwünschte Beeinflussung zu gewährleisten, ist es insbesondere bei Verwendung von zwei oder mehr Magnetsensoren 16, 17 pro Kontaktvorrichtung 2, 2' vorteilhaft, den Abstand zwischen dem Magnetsensor 16, 17 und dem zugeordneten Magnetelement der Akkumulatoren geringer zu bemessen als den Abstand zwischen zwei benachbarten Magnetelementen bzw. zwischen zwei benachbarten Magnetsensoren 16, 17. Als einem Magnetsensor zugeordnetes Magnetelement wird dabei jenes Magnetelement bezeichnet, dessen magnetische Elgenschaft durch diesen Magnetsensor detektiert wird, wenn ein Akkumulator an eine Kontaktvorrichtung 2, 2' angeschlossen ist. Der Abstand zwischen einem Magnetsensor und seinem zugeordneten Magnetelement soll bevorzugt geringer als 5,0 mm, besonders bevorzugt gleich oder geringer 3,0 mm sein. Der Abstand zwischen zwei Magnetelementen und entsprechend zwischen zwei Magnetsensoren 16, 17 soll bevorzugt größer als 8,0 mm, besonders bevorzugt größer 16,0 mm sein.

Die Magnetsensoren 16, 17 sind im Inneren des Ladegeräts auf einer Trägervorrichtung 18, bevorzugt auf einer Platine befestigt. Die Platine wird von Träger- und stützelementen 57 getragen, so dass sie sich in unmittelbarer Nähe des Bodens 56 der Kontaktvorrichtung 2 befindet. Bevorzugt ist auf der Trägervorrlchtung 18 auch die Ladeschaltung angeordnet. Besonders bevorzugt sind auf der Trägervorrichtung 18 noch weitere Schaltungen des Ladegeräts 1, zum Beispiel eine Temperatur-Auswerteschaltung zur Überwachung der Temperatur des Akkumulators 100 oder Schaltungen zum Betrieb der LEDs der Anzeige 29, und die LEDs der Anzeige 29 angeordnet.

Die Erfindung ist nicht auf die beschriebenen Ausführungsbeispiele beschränkt, sondern umfasst alle Ausführungsmöglichkeiten, die das prinzipielle, sinngemäße Funktionsprinzip der Erfindung nicht verändern. So ist es selbstverständlich auch möglich ein Ladegerät zu schaffen, das sowohl eine Identifikationsvorrichtung hat, um einen magnetischen Parameter eines Magneten eines Akkumulators zu bestimmen, als auch eine Identifikationsvorrichtung, die die Veränderung eines magnetischen Parameters eines Magneten der Teil der Ladevorrichtung ist zu erkennen. Die Magnetsensoren können in bekannter Weise auch so ausgeführt sein, dass sie kontinuierlich ein Signal abgeben und dass sie, wenn sie einen magnetischen Parameter detektieren, die Slgnalabgabe unterbrechen, so dass erfindungsgemäß unter dem Begriff "Identifikationssignal" auch die Unterbrechung eines kontinuierlich anstehenden Signals bzw. das "Nicht-Erhalten eines Signals" verstanden wird.

Erfindungsgemäß können des Weiteren auch unterschledliche Ladegeräte miteinander verbunden werden, so zum Beispiel Ladegeräte mit einer unterschiedlichen Anzahl von Kontaktvorrichtungen, mit unterschiedlich geformten oder unterschiedlich großen Kontaktvorrichtungen, Ladegeräte die unterschiedliche Ladeverfahren anwenden usw. Wesentlich ist, dass die Verbindungsvorrichtungen derart ausgebildet sind, dass die Ladegeräte miteinander verbindbar sind, so dass die Stromversorgung eines Ladegeräts über das davor angeordnete Ladegerät und somit durch eine gemeinsame Energiequelle erfolgt.

## Patentansprüche

1. Vorrichtung zum Laden von Akkumulatoren (1, 1') mit zumindest einer elektrischen Kontaktvorrichtung (2, 2') zum Anschluss eines Akkumulators (100) und mit einer ersten, mit der zumindest einen Kontaktvorrichtung (2, 2') elektrisch verbundenen Verbindugnsvorrichtung (3, 3') zum Anschluss der Vorrichtung zum Laden von Akkumulatoren (1, 1') an eine Stromquelle (4), **gekennzeichnet durch**
eine zweite Verbindungsvorrichtung (5. 5'), die mit der ersten Verbindungsvorrichtung (3, 3') elektrisch verbunden ist und die so ausgebildet ist, dass sie mit einer zweiten vorrichtung zum Laden von Akkumulatoren (1, 1') elektrisch verbindbar ist, so dass die zweite Vorrichtung zum Laden von Akkumulatoren (1, 1') Ober die zweite Verbindungsvorrichtung (5, 5') mit der Stromquelle (4) elektrisch verbindbar ist.

2. Vorrichtung zum Laden von Akkumulatoren (1, 1') nach Anspruch 1, **dadurch gekennzeichnet, dass**
zumindest eine der Verbindungsvorrichtungen (3, 3', 5, 5') stiftförmige Kontakte (6) oder buchsenförmige Kontakte (7) oder Federkontakte oder Plankontakte aufweist.

3. Vorrichtung zum Laden von Akkumulatoren (1, 1') nach Anspruch 1 oder 2, **dadurch gekennzeichnet, dass**
die Verbindungsvorrichtungen (3, 3', 5, 5') als mechanische Verbindungselemente ausgebildet sind, so dass durch das Zusammenfügen der Verbindungsvorrichtungen (3, 3', 5, 5') eine mechanische Verbindung zwischen der ersten und zweiten Vorrichtung zum Laden von Akkumulatoren (1, 1') herstellbar ist.

4. Vorrichtung zum Laden von Akkumulatoren (1, 1') nach Anspruch 3, **dadurch gekennzeichnet, dass**
die mechanische Verbindung als Steckverbindung ausgebildet ist, wobei bevorzugt eine der beiden Verbindungsvorrichtungen (3, 3', 5, 5') als Steckglied (8) und die andere der beiden Verbindungsvorrichtungen (3, 3', 5, 5') als Steckaufnahme (9) zur Aufnahme des Steckglieds (8) ausgebildet ist.

5. Vorrichtung zum Laden von Akkumulatoren (1, 1') nach einem der vorhergehenden Ansprüche, **dadurch gekennzeichnet, dass**
die Vorrichtung zum Laden von Akkumulatoren (1, 1') ein Gehäuse (19) mit einem Rücksprung (10) und einem Vorsprung (11) aufweist, wobei jeweils eine der beiden Verblnduhgsvorrichtungen (3, 3', 5, 5') am Rücksprung (10) und am Vorsprung (11) angeordnet ist.

6. Vorrichtuhg zum Laden von Akkumulatoren (1, 1') nach einem der vorhergehenden Ansprüche, **gekennzeichnet durch**
eine erste und zweite Anschlussvorrichtung (12, 13) für ein mechanisches Verbindungselement (14), so dass die erste Vorrichtung zum Laden von Akkumulatoren (1, 1') mit einer zweiten Vorrichtung zum Laden von Akkumulatoren (1, 1') mechanisch verbindbar ist.
